# EUROPEAN PATENT SPECIFICATION

(11) **EP 1 437 277 B1**
(45) Date of publication and mention of the grant of the patent: **01.03.2006**
(21) Application number: 03257544.1
(22) Date of filing: 01.12.2003
(51) Int. Cl.: B60T 8/36, F16K 31/06

(54) **Brake traction control valve**
Ventil für Bremsanlagen mit Antriebsschlupfregelung durch Bremseneingriff
Valve pour systèmes à régulation antipatinage par actionnement des freins

(30) Priority: 13.01.2003 KR 2003001945
(43) Date of publication of application: 14.07.2004
(73) Proprietor: Mando Corporation, Pyungtaek-si, Kyongki-do (KR)
(72) Inventor: Yang, I-Jin, Pyungteak-City Kyonggi-Do (KR)
(74) Representative: Pratt, David Martin

(56) References cited:
- DE-A- 4 129 638
- DE-A- 19 607 933
- US-A- 3 818 927
- US-A- 5 167 442
- US-A- 5 496 100

## Description

The present invention relates, in general, to a brake traction control system capable of preventing a wheel slip on a road surface, and, more particularly, to a brake traction control valve having a relief function, which spontaneously opens a hydraulic line to prevent an excessive increase in pressure of brake oil pressurized by a hydraulic pump when traction control is performed.

In general, traction control is a technology applied to an Anti-lock Brake System (ABS). A traction control system spontaneously detects a wheel slip and brakes an automobile even when a driver does not depress a brake pedal, thus preventing a further wheel slip.

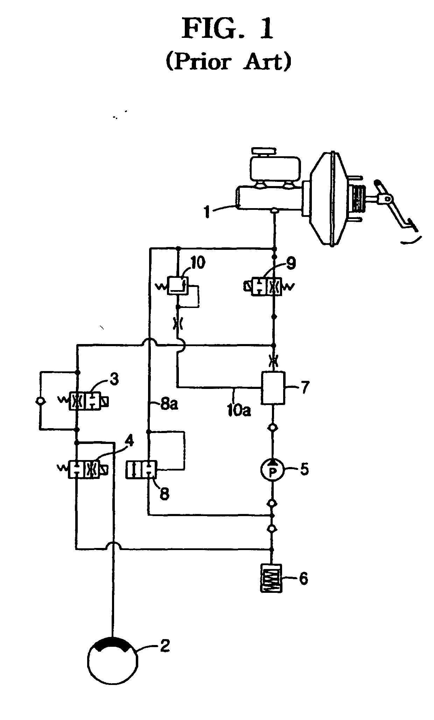

A hydraulic circuit to which the traction control system is applied is shown in FIG. 1. The hydraulic system includes a Normal Open (NO) valve 3 placed on a hydraulic line connected from a master cylinder 1 to wheel cylinders 2, a Normal Close (NC) valve 4 placed on a return hydraulic line from the wheel cylinders 2, a hydraulic pump 5 designed to generate a braking pressure by re-pressuring brake oil returning from the wheel cylinders 2, a low-pressure accumulator 6 and a high-pressure accumulator 7 placed upstream and downstream of the hydraulic pump 5 to accumulate pressure of circulated brake oil, respectively, and an Electronic Control Unit (ECU; not shown).

The hydraulic circuit is also used to perform brake traction control, and further includes a first bypass hydraulic line 8a connecting a hydraulic line connected to an outlet side of the master cylinder 1 with a hydraulic line connected to an inlet side of the hydraulic pump 5, a reciprocating hydraulic valve 8 placed on the first bypass hydraulic line 8a to be normally opened and be closed when a driver depresses a brake pedal 1a, a traction control valve 9 placed on a hydraulic line 9a connecting the outlet side of the master cylinder 1 with an outlet side of the high-pressure accumulator 7 to be normally opened, and a relief valve 10 placed on a second bypass hydraulic line 10a connecting the outlet side of the high-pressure accumulator 7 with the outlet side of the master cylinder 1.

In the conventional brake traction control system, when a wheel slip is detected during a start of an automobile, the hydraulic pump 5 is operated under the control of the ECU and, thus, a braking pressure is applied to the wheel cylinders 2. At this time, the traction control valve 9 and the NC valve 4 are kept closed, so that brake oil located on the outlet side of the master cylinder 1 is drawn into the hydraulic pump 5 through the reciprocating hydraulic valve 8, and the hydraulic pump 5 implements braking of the automobile by pressurizing the drawn brake oil. In the above-described process, when braking pressure formed on the outlet side of the hydraulic pump 5 is excessively high, the relief valve 10 is opened and brake oil flows toward the master cylinder 1 through the second bypass hydraulic line 10a, thus maintaining appropriate braking pressure.

However, the conventional brake traction control system is disadvantageous in that it is complicated and voluminous because it must be provided with the second bypass hydraulic line 10a and the relief valve 10 to prevent an excessive increase in pressure on the outlet side of the hydraulic pump 5.

Known brake traction control valves are described in DE 41 29 638A, DE 196 07 933A and US-A-5 496 100.

Accordingly, it is an aim of the present invention to provide a brake traction control valve, which has a spontaneous relief function of being spontaneously opened when pressure formed on an outlet side of a hydraulic pump excessively increases during brake traction control, thus maintaining appropriate braking pressure on the outlet side of the hydraulic pump without an additional bypass line and a relief valve.

Additional aims and/or advantages of the invention will be set forth in part in the description which follows and, in part, will be obvious from the description, or may be learned by practice of the invention.

The present invention provides a brake traction control valve comprising a valve core having an inlet to allow the inside and the outside of the valve core to communicate with each other, and a valve seat provided with an orifice therein; a shell having a dome plus cylinder shape, the shell being coupled to the valve core to cover one end of the valve core; an armature placed in the shell to move forwards and backwards; an exciting coil placed around the shell to cause the armature to move forwards and backwards; a plunger placed in the valve core to move forwards and backwards for selectively opening and closing the orifice of the valve seat while moving forwards and backwards by an operation of the armature; and a return spring for returning the plunger and the armature to open the orifice of the valve seat; characterised by a closing member located in an end of the plunger to move forwards and backwards for selectively opening and closing the orifice of the valve seat; and a relief spring located in an end portion of the plunger for pushing the closing member so that the closing member is pushed by oil pressure when the oil pressure increases above predetermined pressure, thereby opening the orifice.

The brake traction control valve may further comprise a spring cavity longitudinally formed in an end of the plunger to accommodate the relief spring, and a cylindrical support member fitted over an end of the plunger at a first end thereof and adapted to surround an outside surface of the closing member at a second end thereof.

The plunger may be provided with a communicating passage to allow the inside and the outside of the spring cavity to communicate with each other.

The plunger may be provided with a depressed portion on an outside surface thereof, and the support member may have an outer diameter identical with the outer diameter of the plunger at a portion thereof fitted over the plunger, and a decreased diameter while extending toward a portion thereof where the closing member is supported.

The closing member may be formed of a spherical body, and the support member may have an inside diameter larger than the diameter of the closing member, so that the closing member is held and supported by the support member, at a portion thereof where the closing member is supported.

The closing member may comprise a hemispherical closing portion and a spring support portion extending from the closing portion by a certain length to be combined with the relief spring, and the support member may have an inside diameter smaller than the maximum diameter of the closing portion so that the closing portion is held and supported by the support member, at a portion of the support member where the closing member is supported.

The return spring may be supported by the valve seat at a first end thereof and by an outside surface of the support member at a second end thereof.

These and other aspects and advantages of the invention will become apparent and more readily appreciated from the following description of the preferred embodiments, taken in conjunction with the accompanying drawings of which:
FIG. 1 is a hydraulic circuit diagram of an ABS to which a conventional brake traction control valve is applied;
FIG. 2 is a hydraulic circuit diagram of an ABS to which a brake traction control valve according to the present invention is applied;
FIG. 3 is a sectional view showing a construction of the brake traction control valve of the present invention;
FIG. 4 is a partially detailed view of the brake traction control valve of the present invention;
FIG. 5 is a partially detailed view of a brake traction control valve according to another embodiment of the present invention;
FIG. 6 is a sectional view showing an operation of the brake traction control valve of the present invention with an oil passage of brake traction control valve opened;
FIG. 7 is a sectional view showing an operation of the brake traction control valve of the present invention with the oil passage of the brake traction control valve closed; and
FIG. 8 is a sectional view showing an operation of the brake traction control valve of the present invention with the oil passage of the brake traction control valve closed and a relief function of the brake traction control valve performed.

Reference will now be made in detail to the present preferred embodiments of the present invention, examples of which are illustrated in the accompanying drawings, wherein like reference numerals refer to like elements throughout.

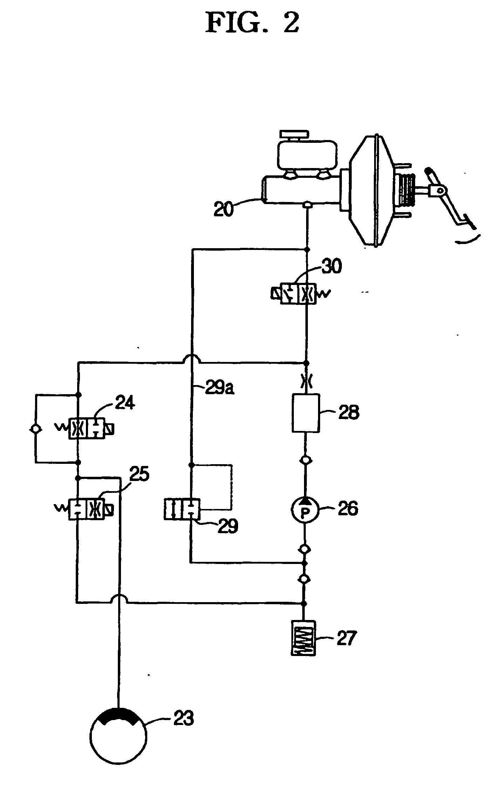

A hydraulic circuit of an ABS to which the present invention is applied, as shown in FIG. 2, includes an NO valve 24 placed on a hydraulic line connecting a master cylinder 20 with wheel cylinders 23 to selectively open and close the hydraulic line, and an NC valve 25 to selectively open and close a hydraulic line through which brake oil returns from the wheel cylinders 23. The NO valve 24 is operated in conjunction with the NC valve 25. That is, when the NO valve 24 is opened, the NC valve 25 is closed, so that braking pressure can be applied to wheels of an automobile. In contrast, when the NO valve 24 is closed, the NC valve 25 is opened, so that braking pressure can be removed from the wheels.

The hydraulic circuit of the ABS further includes a hydraulic pump 26 to re-pressurize brake oil returned from the wheel cylinders 23 to a hydraulic line upstream of the NO valve 24, and a low-pressure accumulator 27 and a high-pressure accumulator 28 to be placed on hydraulic lines upstream and downstream of the hydraulic pump 26, respectively, to form a buffer space. The low-pressure accumulator 27 placed upstream of the hydraulic pump 26 temporarily stores brake oil returned from the wheel cylinders 23 and supplies the stored brake oil to the hydraulic pump 26, and the high-pressure accumulator 28 temporarily stores brake oil pressurized by the hydraulic pump 26 so that pressure pulsation caused by an operation of the hydraulic pump 26 is reduced. The operations of the above-described elements are controlled by an ECU (not shown). In more detail, the ECU controls the NO and NC valves 24 and 25 to close a hydraulic line through which brake oil is supplied toward the wheels, and controls the hydraulic pump 26 to re-pressurize brake oil located near the low-pressure accumulator 27 toward the wheels, thus realizing intermittent braking.

The hydraulic circuit further includes a bypass hydraulic line 29a connecting a hydraulic line connected to an outlet side of the master cylinder 20 with a hydraulic line connected to an inlet side of the hydraulic pump 26, and a reciprocating hydraulic valve 29 placed on the bypass hydraulic line 29a to be normally opened and be closed when a driver depresses a brake pedal 22 and, thus, braking pressure is applied thereto. This is operated so that braking pressure produced when the driver depresses the brake pedal 28 can be transmitted to the wheel cylinders 23.

A brake traction control valve 30 is placed on a hydraulic line connecting the outlet side of the master cylinder 20 with an outlet side of the high-pressure accumulator 28. The traction control valve 30 normally opens the hydraulic line, and closes the hydraulic line when a wheel slip occurs so that braking pressure produced by an operation of the hydraulic pump 26 is transmitted to the wheels, thus spontaneously braking an automobile even when the driver does not depress the brake pedal 22.

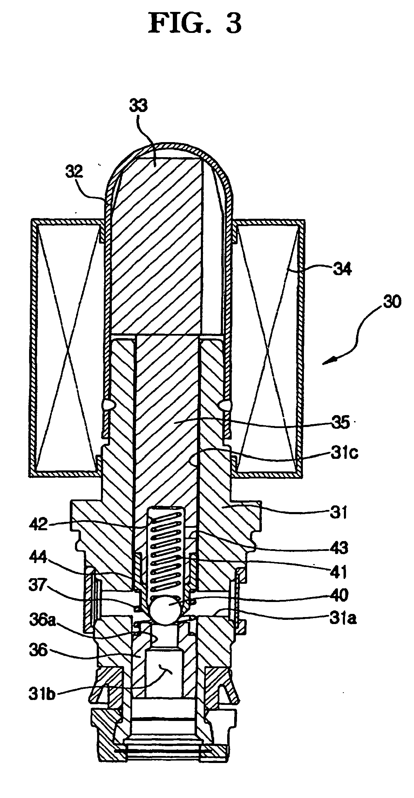

The traction control valve 30, as shown in FIG. 3, includes a magnetic valve core 31 provided with an inlet 31a formed to allow an inside and outside thereof to communicate with each other and a hollow portion 31c longitudinally formed through a center portion thereof, a dome plus cylinder-shaped shell 32 coupled to the magnetic valve core 31 to cover an end of the magnetic valve core 31, and an armature 33 located in an inside of the shell 32 to selectively move forward and backward. The traction control valve 30 further includes a cylindrical exciting coil 34 located around the valve core 31 and the shell 32 to cause the armature 33 to selectively move forward and backward, a valve seat 36 tightly fitted into the inside of the valve core 31 and provided with an orifice 36a at a center thereof, a plunger 35 located in the inside of the valve core 31 to be operated so that it can selectively open and close the orifice 36a of the valve seat 36 while selectively moving forward and backward by operations of the armature 33, and a return spring 37 located between an end of the plunger 35 and the valve seat 36 to return the plunger 35 and the armature 33 so that the orifice 36a of the valve seat 36 is normally kept opened.

The traction control valve 30 of the present invention further includes a ball-shaped closing member 40 fitted into an end of the plunger 35 to move forward and backward so that it performs a relief function of opening the orifice 36a when oil pressure increases above predetermined pressure while the orifice 36a of the valve seat 36 is closed, and a relief spring 41 accommodated in an end portion of the plunger 35 to push the closing member 40 toward the valve seat 36.

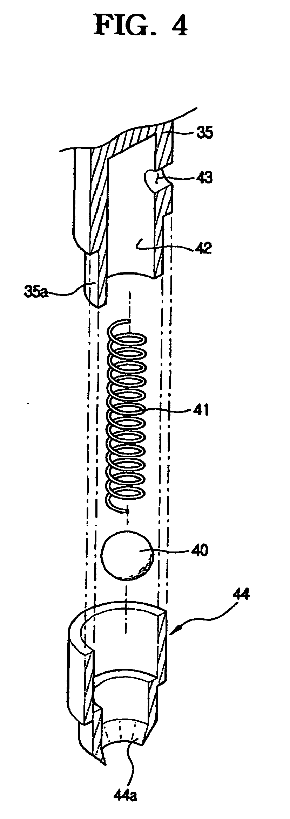

To this end, a spring cavity 42, as shown in FIGS. 3 and 4, is longitudinally formed in the end portion of the plunger 35 to accommodate and support the relief spring 41, and a cylindrical support member 44 is fitted over the end of the plunger 35 to prevent the closing member 40 from being removed therefrom and support the closing member 40 to allow the closing member 40 to move forward and backward. The support member 44 is secured to the end of the plunger 35 at an end thereof, and is brought into contact with an outside surface of the closing member 40. A communicating passage 43 is formed to allow inside and outside of the plunger 35 to communicate with each other and allow brake oil flowing into the spring cavity 42 to flow in a radial direction.

A depressed portion 35a having a smaller diameter is formed on the outside surface of the plunger 35 so that an outer diameter of the support member 44 becomes identical with an outer diameter of the plunger 35 when the support member 44 is fitted over the plunger 35. The support member 44 is depressed so that the outer diameter of the support member 44 is reduced while extending from a portion thereof fitted over the plunger 35 before a portion 44a thereof adapted to hold the closing member 40. Furthermore, an inner diameter of the portion 44a of the support member 44 adapted to hold the closing member 40 is formed to be smaller than a diameter of the closing member 40 so that the closing member 40 is held and supported by the portion 44a of the support member 44. Accordingly, the closing member 40 is supported by the support member 44 not only to move forward and backward but also to be partially protruded from the support member 44 so that the plunger 35 selectively open and close the orifice 36a of the valve seat 36 while selectively moving forward and backward.

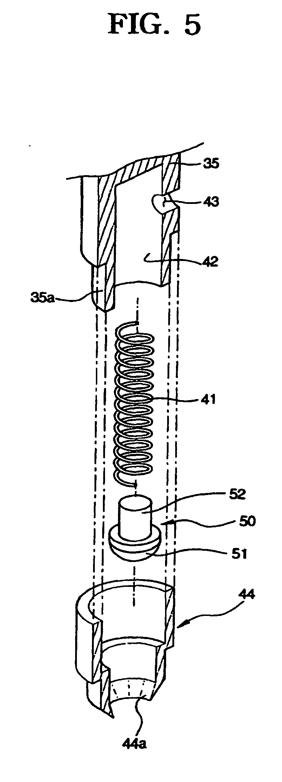

FIG. 5 is a view of a brake traction control valve according to another embodiment of the present invention. A closing member 50 includes a hemispherical closing portion 51 to selectively open and close the orifice 36a of the valve seat 36, and a spring support portion 52 extending from the closing portion 50 by a certain length to be combined with the relief spring 41. In this case, an inside diameter of a portion of the support member 44 adapted to hold the closing portion 50 is designed to be smaller than a maximum diameter of the closing portion 50 so that the closing portion 51 is held and supported by the support portion 44 in the same way as in the above-described embodiment.

Next, operations of a brake traction control system to which the above-described traction control valve are described below.

When a driver depresses the brake pedal 22, braking pressure is produced in the master cylinder 20. The braking pressure is transmitted to the wheel cylinders 23 through the NO valve 24 and produces a braking force. If a wheel slip occurs due to transmission of excessive braking pressure, the wheel slip is detected by wheel sensors (not shown) placed at locations near the wheels, and information about the wheel slip is transmitted to the ECU. Then, the ECU opens the NC valve 25, so that brake oil flows out of the wheel cylinders 23, thus temporarily removing braking and, thus, preventing the wheel slip.

The brake oil flowing out of the NC valve 25 is temporarily stored in the low-pressure accumulator 27, the brake oil stored in the low-pressure accumulator 27 is re-pressurized by an operation of the hydraulic pump 26, the re-pressurized brake oil is discharged into the high-pressure accumulator 28, and the brake oil discharged into the high-pressure accumulator 28 is supplied to a hydraulic line upstream of the NO valve 24, thus forming braking pressure. The above-described operations are repeatedly performed under the control of the ECU, so that braking pressure is intermittently applied to the wheel cylinders 23, thereby performing a stable braking operation.

In the meantime, when a wheel slip is detected due to an abrupt start of the automobile or the like without regard to a manipulation of the brake pedal 22 of the driver, the traction control valve 30 and the NC valve 25 are closed and the hydraulic pump 26 is operated under the control of the ECU, so that braking pressure formed by the operation of the hydraulic pump 26 is applied to the wheels through the NO valve 24, thus realizing braking of the automobile. At this time, brake oil is supplied from the outlet side of the master cylinder 20 through the reciprocating hydraulic valve 29 to the hydraulic pump 26, and the hydraulic pump 26 pressurizes the brake oil, thus realizing braking of the automobile.

When braking pressure formed on the outlet side of the hydraulic pump 26 and, thus, a braking force applied to the wheels is excessive during the above-described operations, a passage of the traction control valve 30 is spontaneously opened by the relief function of the traction control valve 30 and brake oil located on the outlet side of the hydraulic pump 26 flows toward the master cylinder 20, so that braking pressure applied to the wheels is appropriately maintained, thus preventing the wheels from being completely stopped and enabling smooth start of the automobile.

Detailed operations of the traction control valve 30, which performs the function, are described below.

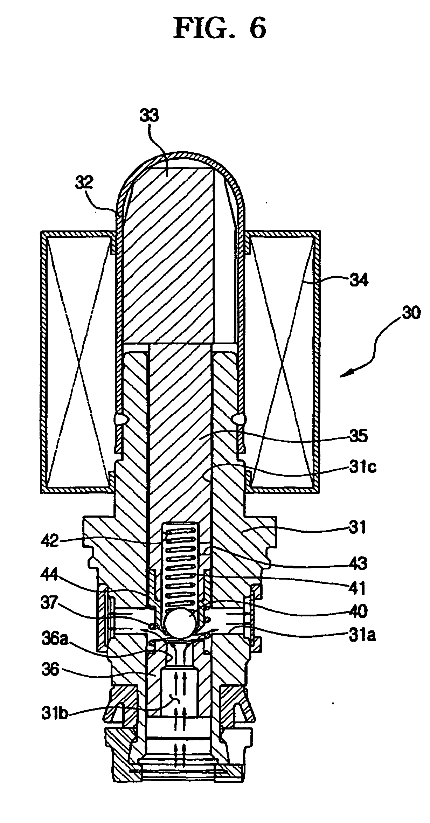

When power is not applied to the exciting coil 34, the plunger 35 and the armature 33, as shown in FIG. 6, are kept moved toward the shell 32 by an elastic force of the return spring 37, so that the orifice 36a of the valve seat 36 is spaced apart from the closing member 40 fitted over the end of the plunger 35. Accordingly, at this time, the passage of the traction control valve 30 is opened so that brake oil flowing into the inlet 31 a of the traction control valve 30 from the master cylinder 20 flows toward the NO valve 24 through an outlet 31b of the traction control valve 30.

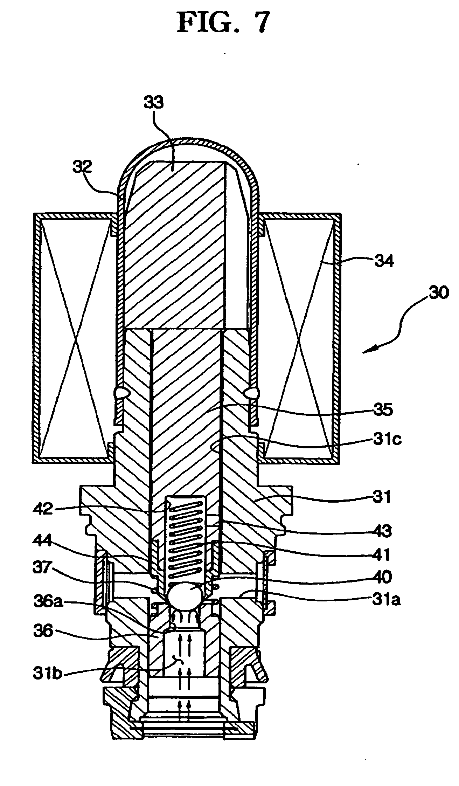

In contrast, when power is applied to the exciting coil 34, the plunger 35 is pushed toward the valve seat 36 by movement of the armature 33 toward the valve core 31, as shown in FIG. 7, so that the closing member 40 fitted into the lower end of the plunger 35 closes the orifice 36a of the valve seat 36. Accordingly, at this time, brake oil pressurized by the hydraulic pump 26 does not flow toward the master cylinder 20 but flows toward the wheels of the automobile through the NO valve 24, so that braking of the wheels is realized even though the driver does not depress the brake pedal 22.

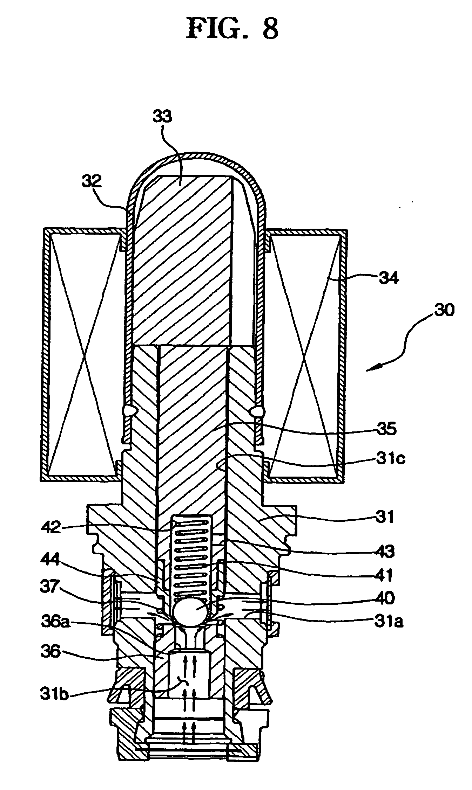

When braking pressure applied to the wheel cylinders 23 by the operation of the hydraulic pump 26 increases above the predetermined value while the closing of the traction control valve 30 continues, the relief spring 41 is pushed by oil pressured formed on the outlet side of the orifice 36a and the closing member 40 is spaced apart from the orifice 36a, as shown in FIG. 8, so that the orifice 36a is opened and brake oil flows toward the master cylinder 20. That is, at that time, since oil pressure formed on the outlet side of the orifice 36a is greater than the elastic force of the relief spring 41, the relief spring 41 is pushed and, simultaneously, the closing member 40 is pushed, the oil passage of the traction control valve 30 is opened, so that brake oil flows toward the master cylinder 20, thus decreasing oil pressure formed on the outlet side of the hydraulic pump 26 to an appropriate level.

At this time, the armature 33 continues to push the plunger 35. Accordingly, brake oil flowing toward the master cylinder 20 flows into the spring cavity 42 through a gap between the closing member 40 and the support member 44, and the brake oil placed in the spring cavity 42 flows out of the plunger 35 through the communicating passage 43. When oil pressure formed on the outlet side of the hydraulic pup 26 decreases below the predetermined pressure, the closing member 40 closes the orifice 36a of the valve seat 36 by the elasticity of the relief spring 41, so that oil pressure formed on the outlet side of the hydraulic pump 36 can be appropriately maintained.

As described in detail above, in the brake traction control valve according to the present invention, when the oil pressure formed on the outlet side of the hydraulic pump is higher than the predetermined pressure, the closing member is pushed by oil pressure and the oil passage is opened. Accordingly, brake oil located on the outlet side of the hydraulic pump can flow toward the master cylinder, so that braking pressure formed on the outlet side of the hydraulic pump can be appropriately adjusted without using an additional bypass hydraulic line and a relief valve. As a result, a construction of a brake system can be simplified, and a volume of the brake system can be reduced.

Although a preferred embodiment of the present invention has been shown and described, it would be appreciated by those skilled in the art that changes may be made in these embodiments.

## Claims

1. A brake traction control valve (30) comprising:
a valve core (31) having an inlet (31a) to allow the inside and the outside of the valve core to communicate with each other, and a valve seat (36) provided with an orifice (36a) therein;
a shell (32) having a dome plus cylinder shape, the shell being coupled to the valve core to cover one end of the valve core;
an armature (33) placed in the shell to move forwards and backwards;
an exciting coil (34) placed around the shell to cause the armature to move forwards and backwards;
a plunger (35) placed in the valve core to move forwards and backwards for selectively opening and closing the orifice of the valve seat while moving forwards and backwards by an operation of the armature; and
a return spring (37) for returning the plunger and the armature to open the orifice of the valve seat; **characterised by**
a closing member (40,50) located in an end of the plunger to move forwards and backwards for selectively opening and closing the orifice of the valve seat; and
a relief spring (41) located in an end portion of the plunger for pushing the closing member so that the closing member is pushed by oil pressure when the oil pressure increases above predetermined pressure, thereby opening the orifice.

2. A valve as claimed in claim 1, further comprising:
a spring cavity (42) longitudinally formed in an end of the plunger (35) to accommodate the relief spring (41), and a cylindrical support member (44) fitted over an end of the plunger at a first end thereof and adapted to surround an outside surface of the closing member (40,50) at a second end thereof.

3. A valve as claimed in claim 2, wherein the plunger (35) is provided with a communicating passage (43) to allow the inside and the outside of the spring cavity (42) to communicate with each other.

4. A valve as claimed in claim 2 or claim 3, wherein:
the plunger (35) is provided with a depressed portion (35a) on an outside surface thereof; and
the support member (44) has an outer diameter identical with the outer diameter of the plunger at a portion thereof fitted over the plunger, and a decreased diameter while extending towards a portion thereof where the closing member (40) is supported.

5. A valve as claimed in any one of claims 2 to 4, wherein:
the closing member (40) is formed of a spherical body; and
the support member (44) has an inside diameter larger than the diameter of the closing member so that the closing member is held and supported by the support member, at a portion thereof where the closing member is supported.

6. A valve as claimed in any one of claims 2 to 5, wherein:
the closing member (50) comprises a hemispherical closing portion (51) and a spring support portion (52) extending from the closing portion by a certain length to be combined with the relief spring (41); and
the support member (44) has an inside diameter smaller than the maximum diameter of the closing portion so that the closing portion is held and supported by the support member, at a portion of the support member where the closing member is supported.

7. A valve as claimed in any one of claims 2 to 6, wherein the return spring (37) is supported by the valve seat (36) at a first end thereof and by an outside surface of the support member (44) at a second end thereof.

## Revendications

1. Valve pour systèmes de régulation antipatinage par actionnement des freins (30), comprenant:
un noyau de valve (31) comportant une entrée (31a) permettant à l'intérieur et à l'extérieur du noyau de valve de communiquer l'un avec l'autre, et un siège de valve (36) comportant au moins un orifice (36a);
une coque (32) ayant la forme d'un dôme et d'un cylindre, la coque étant couplée au noyau de valve pour couvrir une extrémité du noyau de valve;
une armature (33) placée dans la coque pour se déplacer vers l'avant et vers l'arrière;
une bobine d'excitation (34) placée autour de la coque pour entraîner l'armature à se déplacer vers l'avant et vers l'arrière;
un plongeur (35) placé dans le noyau de valve pour se déplacer vers l'avant et vers l'arrière pour ouvrir et fermer sélectivement l'orifice du siège de valve tout en se déplaçant vers l'avant et vers l'arrière par un actionnement de l'armature; et
un ressort de rappel (37) pour renvoyer le plongeur et l'armature pour ouvrir l'orifice du siège de valve; **caractérisée par**:
un élément de fermeture (40, 50) situé dans une extrémité du plongeur pour se déplacer vers l'avant et vers l'arrière afin d'ouvrir et de fermer sélectivement l'orifice du siège de valve; et
un ressort de relaxation (41) situé dans une partie d'extrémité du plongeur pour pousser l'élément de fermeture de telle sorte que l'élément de fermeture soit poussé par une pression d'huile lorsque la pression d'huile augmente au-dessus d'une pression prédéterminée, ouvrant ainsi l'orifice.

2. Valve selon la revendication 1, comprenant en outre:
un cavité de ressort (42) formée longitudinalement dans une extrémité du plongeur (35) pour recevoir le ressort de relaxation (41), et un élément de support cylindrique (44) agencé sur une extrémité du plongeur à une première extrémité de celui-ci et adapté pour entourer une surface extérieure de l'élément de fermeture (40, 50) à une deuxième extrémité de celui-ci.

3. Valve selon la revendication 2, dans laquelle le plongeur (35) comprend un passage de communication (43) permettant à l'intérieur et à l'extérieur de la cavité de ressort (42) de communiquer l'un avec l'autre.

4. Valve selon la revendication 2 ou la revendication 3, dans laquelle:
le plongeur (35) présente une partie creusée (35a) sur une surface extérieure de celui-ci; et
l'élément de support (44) présente un diamètre extérieur identique au diamètre extérieur du plongeur à une partie de celui-ci agencée sur le plongeur, et un diamètre réduit en s'étendant vers une partie de celui-ci où l'élément de fermeture (40) est supporté.

5. Valve selon l'une quelconque des revendications 2 à 4, dans laquelle:
l'élément de fermeture (40) est constitué d'un corps sphérique; et
l'élément de support (44) présente un diamètre intérieur plus grand que le diamètre de l'élément de fermeture, de telle sorte que l'élément de fermeture soit maintenu et supporté par l'élément de support à une partie de celui-ci où l'élément de fermeture est supporté.

6. Valve selon l'une quelconque des revendications 2 à 5, dans laquelle:
l'élément de fermeture (50) comprend une partie de fermeture hémisphérique (51) et une partie de support de ressort (52) s'étendant à partir de la partie de fermeture sur une certaine longueur lui permettant d'être combinée avec le ressort de relaxation (41); et
l'élément de support (44) présente un diamètre intérieur plus petit que le diamètre maximum de la partie de fermeture, de telle sorte que la partie de fermeture soit maintenue et supportée par l'élément de support à une partie de l'élément de support où l'élément de fermeture est supporté.

7. Valve selon l'une quelconque des revendications 2 à 6, dans laquelle le ressort de rappel (37) est supporté par le siège de valve (36) à une première extrémité de celui-ci et par une surface extérieure de l'élément de support (44) à une deuxième extrémité de celui-ci.

## Patentansprüche

1. Bremsenantischlupfsteuerventil (30), das folgendes umfaßt:
einen Ventilkern (31) mit einem Einlaß (31a), damit das Innere und das Äußere des Ventilkerns miteinander kommunizieren können, sowie einen Ventilsitz (36) mit einer darin vorgesehenen Öffnung (36a) einen zylindrischen Mantel (32) mit kuppelförmigen Ende, der mit dem Ventilkern gekoppelt ist, um ein Ende des Ventilkerns abzudecken;
einen im Mantel plazierten Anker (33), der sich vorwärts und rückwärts bewegen kann;
eine um den Mantel herum plazierte Erregerspule (34), um zu bewirken, daß sich der Anker vorwärts und rückwärts bewegt;
einen im Ventilkern plazierten Plunger (35), der sich vorwärts und rückwärts bewegt, um die Öffnung des Ventilsitzes wahlweise zu öffnen und zu schließen, während er sich aufgrund eines Betriebs des Ankers vorwärts und rückwärts bewegt; und
eine Rückstellfeder (37), um den Plunger und den Anker zurückzustellen, damit die Öffnung des Ventilsitzes geöffnet wird; **gekennzeichnet durch**
ein Schließelement (40, 50), das sich in einem Ende des Plungers befindet, damit er sich vorwärts und rückwärts bewegt, um die Öffnung des Ventilsitzes wahlweise zu öffnen und zu schließen; und
eine Entlastungsfeder (41), die sich in einem Endabschnitt des Plungers befindet, um das Schließelement zu schieben, so daß das Schließelement durch Öldruck geschoben wird, wenn der Öldruck über einen vorbestimmten Druck ansteigt, wodurch die Öffnung geöffnet wird.

2. Ventil nach Anspruch 1, das weiterhin folgendes umfaßt:
einen Federhohlraum (42), der in Längsrichtung in einem Ende des Plungers (35) ausgebildet ist, um die Entlastungsfeder (41) unterzubringen, sowie ein über einem Ende des Plungers an einem ersten Ende davon eingepaßtes zylindrisches Stützelement (44), das so ausgeführt ist, daß es eine äußere Oberfläche des Schließelements (40, 50) an einem zweiten Ende davon

3. Ventil nach Anspruch 2, bei dem der Plunger (35) mit einem kommunizierenden Durchgang (43) ausgestattet ist, damit das Innere und das Äußere des Federhohlraums (42) miteinander kommunizieren können.

4. Ventil nach Anspruch 2 oder Anspruch 3, bei dem
der Plunger (35) mit einem vertieften Abschnitt (35a) an einer Außenfläche davon ausgestattet ist; und
das Stützelement (44) einen Außendurchmesser, der mit dem Außendurchmesser des Plungers an einem über dem Plunger eingepaßten Abschnitt davon identisch ist, sowie einen verringerten Durchmesser hat, der sich hin zu einem Abschnitt davon, wo das Schließelement (40) abgestützt wird, erstreckt.

5. Ventil nach einem der Ansprüche 2 bis 4, bei dem
das Schließelement (40) aus einem kugelförmigen Körper besteht; und
das Stützelement (44) einen Innendurchmesser hat, der größer als der Durchmesser des Schließelements ist, so daß das Schließelement an einem Abschnitt davon, wo das Schließelement abgestützt wird, vom Stützelement gehalten und abgestützt wird.

6. Ventil nach einem der Ansprüche 2 bis 5, bei dem
das Schließelement (50) einen halbkugelförmigen Schließabschnitt (51) umfaßt, und wobei sich ein Federstützabschnitt (52) vom Schließabschnitt über eine gewisse Länge erstreckt, so daß er mit der Entlastungsfeder (41) kombiniert werden kann; und
das Stützelement (44) einen Innendurchmesser hat, der kleiner als der maximale Durchmesser des Schließabschnitts ist, so daß der Schließabschnitt an einem Abschnitt des Stützelements, wo das Schließelement abgestützt wird, vom Stützelement gehalten und abgestützt wird.

7. Ventil nach einem der Ansprüche 2 bis 6, bei dem die Rückstellfeder (37) durch den Ventilsitz (36) an einem ersten Ende davon und durch eine Außenfläche des Stützelements (44) an einem zweiten Ende davon abgestützt wird.
